(19) Europäisches Patentamt

European Patent Office

Office européen des brevets

(11) **EP 1 550 924 A1**

(12) **EUROPEAN PATENT APPLICATION**
published in accordance with Art. 158(3) EPC

(43) Date of publication:
06.07.2005 Bulletin 2005/27

(51) Int Cl.7: **G05B 13/02**

(21) Application number: 03736051.8

(86) International application number:
**PCT/JP2003/007164**

(22) Date of filing: 05.06.2003

(87) International publication number:
**WO 2004/034163 (22.04.2004 Gazette 2004/17)**

(84) Designated Contracting States:
**AT BE BG CH CY CZ DE DK EE ES FI FR GB GR HU IE IT LI LU MC NL PT RO SE SI SK TR**

(30) Priority: 08.10.2002 JP 2002294902

(71) Applicant: **KABUSHIKI KAISHA YASKAWA DENKI Kitakyushu-Shi, Fukuoka 806-0004 (JP)**

(72) Inventors:
• **HAGIHARA, Jun,
KABUSHIKI KAISHA YASKAWA DENKI
kitakyushu-shi, Fukuoka 806-0004 (JP)**

• **NAKAMURA, Hiroshi,
KABUSHIKI KAISHA YASKAWA DENKI
kitakyushu-shi, Fukuoka 806-0004 (JP)**

(74) Representative: **Grünecker, Kinkeldey,
Stockmair & Schwanhäusser Anwaltssozietät
Maximilianstrasse 58
80538 München (DE)**

(54) **OPTIMAL INSTRUCTION CREATION DEVICE**

(57)     The invention relates to a apparatus for producing an optimum command to process a command to be input to a servo control section in order to operate a control object having a vibrating element without a vibration in such a manner that a delay from a command is reduced as greatly as possible.

An optimum command producing apparatus for inputting a command, processing the command in such a manner that a control object implements a desirable operation and outputting an optimum command value to a servo control apparatus, includes an N-order filter processing section (1) for carrying out an N-order filter processing for the command and calculating values from a 1-rank differential to an (N-1)-rank differential of the command subjected to the filter processing, and an arithmetic unit (2) for adding a value obtained by multiplying an output of the N-order filter processing section (1) by a gain.

*FIG. 1*

**Description**

[TECHNICAL FIELD]

The present invention relates to a method of controlling a machine tool or an industrial robot, and more particularly to an optimum command producing apparatus for processing a command input to a servo control section in order to operate a control object having a vibrating element without a vibration to reduce a delay from a command as greatly as possible.

[BACKGROUND ART]

Conventionally, various 2-freedom degree controls have been proposed for a method of improving both a command following characteristic and a disturbance response characteristic. Means capable of easily designing the command following characteristic and the disturbance response characteristic independently has been disclosed in JP-B-7-21724.

Referring to this method, there has been described that a feedback system is constituted in a controlled object simulating circuit for simulating a controlled object in addition to a conventional feedback control system, and a 2-freedom degree control system is constituted for the controlled object by using a simulating input signal sent to the controlled object simulating circuit and a simulating output signal obtained from the controlled object simulating circuit.

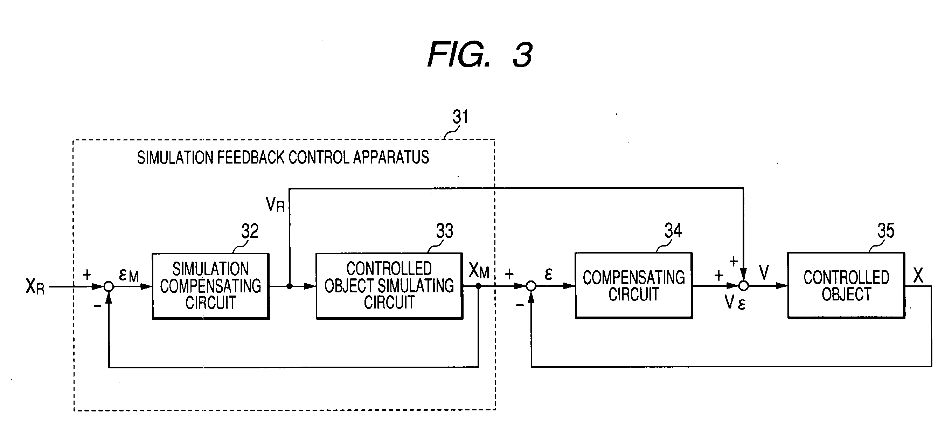

Fig. 3 is a diagram for explaining a conventional method. In the drawing, 31 denotes a simulation feedback control apparatus in which the calculation of a feedforward section is carried out. 32 denotes a simulation compensating circuit for inputting a deviation $\varepsilon_M$ between a command $x_R$ and a state amount $x_M$ output from a controlled object simulating circuit and calculating a simulating input signal $v_R$ to be sent to the controlled object simulating circuit. 33 denotes the controlled object simulating circuit for modeling a controlled object 35. 34 denotes a feedback system compensating circuit for inputting a deviation $\varepsilon$ between $x_M$ and a state amount $x$ of the controlled object and outputting a control input signal $v_\varepsilon$. $v_\varepsilon$ and $v_R$ are added to calculate a final control input signal $v$.

However, the conventional servo control method has four problems which will be described below.

(1) A calculation for the model of the controlled object and a calculation in the simulation compensating circuit are required in the simulation feedback control apparatus. For this reason, an amount of the calculation is very large and a long time is required for the calculation. Therefore, a control sampling cycle cannot be shortened. As a result, there is a problem in that a control performance is deteriorated.

(2) In the simulation feedback control apparatus, moreover, a feedback control is carried out. For this reason, $x_M$ is always delayed from the command $x_R$. Furthermore, x is also delayed from $x_M$ in a feedback control section. Therefore, there is a problem in that the operation x of the controlled object is greatly delayed from the original command $x_R$.

(3) In addition, the controlled object simulating circuit is used in the simulation feedback control apparatus. For this reason, a parameter to be used in the controlled object simulating circuit is required. Therefore, there is a problem in that the number of parameters to be input is increased and a large number of memories are to be provided.

(4) Moreover, the feedback control is carried out in the simulation compensating circuit provided in the simulation feedback control apparatus. For this reason, it is necessary to determine and regulate a gain. Therefore, there is a problem in that everybody neither builds nor uses this method easily.

[DISCLOSURE OF THE INVENTION]

Accordingly, it is an object of the invention to provide an optimum command producing apparatus to solve the four problems at the same time.

In order to solve the problems, a first invention is directed to an optimum command producing apparatus for inputting a command, processing the command in such a manner that a control object implements a desirable operation and outputting an optimum command value to a servo control apparatus, comprising an N-order filter processing section for carrying out an N-order filter processing for the command and calculating values from a 1-rank differential to an (N-1)-rank differential of the command subjected to the filter processing, and an arithmetic unit for adding a value obtained by multiplying an output of the N-order filter processing section by a gain, and furthermore, a second invention is directed to an optimum command producing apparatus for inputting a command, processing the command in such a manner that a control object implements a desirable operation and outputting an optimum command value to a servo control apparatus, comprising an N-order filter processing section for carrying out an N-order filter processing for the command and calculating values from a 1-rank differential to an (N-1)-rank differential of the command subjected to the filter processing, an arithmetic unit for adding a value obtained by multiplying an output of the N-order filter processing section by a gain, and an M-order filter processing section for carrying out an M-order filter processing over respective variables output from the arithmetic unit again.

Moreover, a third invention is directed to an optimum command producing apparatus for inputting a command, processing the command in such a manner that a control object implements a desirable operation and outputting an optimum command value to a servo control apparatus, comprising an N-order filter processing section for carrying out an N-order filter processing for the command and calculating values from a 1-rank differential to an L-rank differential of the command subjected to the filter processing, and an arithmetic unit for multiplying, by a gain, the values from the 1-rank differential to the L-rank differential to be outputs of the N-order filter processing section respectively and then adding all of them up.

Furthermore, an optimum command producing apparatus according to a fourth invention is characterized in that a value of L of the L-rank differential is an order of a model for approximating the control object.

Moreover, an optimum command producing apparatus according to a fifth invention is characterized in that a recursive type filter or a non-recursive type filter is used for the N-order filter and an order N of the N-order filter is set to be an order or more which is necessary for converting the command to be L-rank differentiable.

Furthermore, an optimum command producing apparatus according to a sixth invention is characterized in that the optimum command value is one of a position command, a speed command, an acceleration command and a torque command or a combination thereof.

[BRIEF DESCRIPTION OF THE DRAWINGS]

Fig. 1 is a block diagram showing a first structure according to the invention.

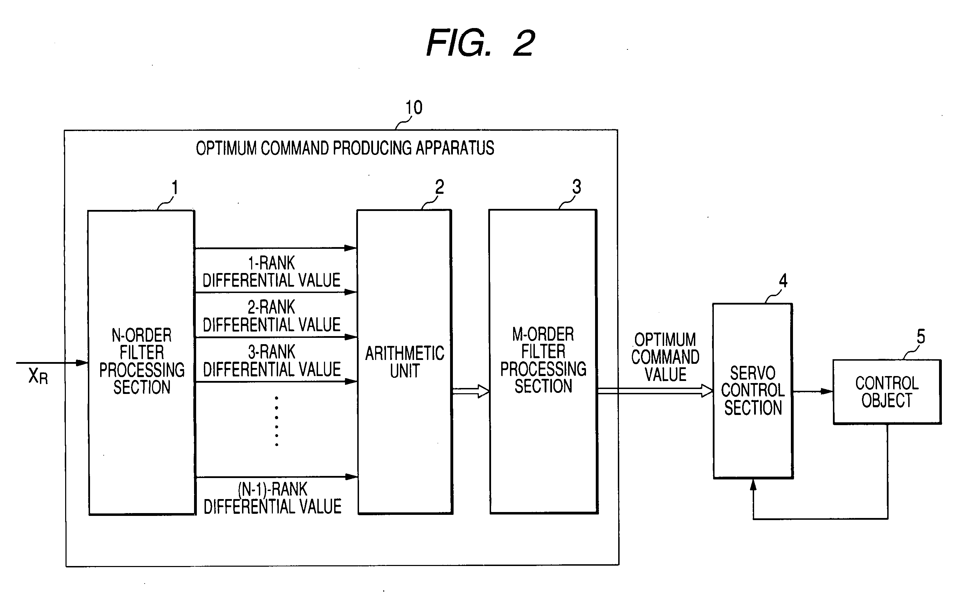

Fig. 2 is a block diagram showing a second structure according to the invention.
Fig. 3 is a block diagram showing the structure of a conventional apparatus.
Fig. 4 is a block diagram showing a third structure according to the invention.
Fig. 5 is a block diagram showing the processing of an arithmetic unit in the third structure according to the invention.

[BEST MODE FOR CARRYING OUT THE INVENTION]

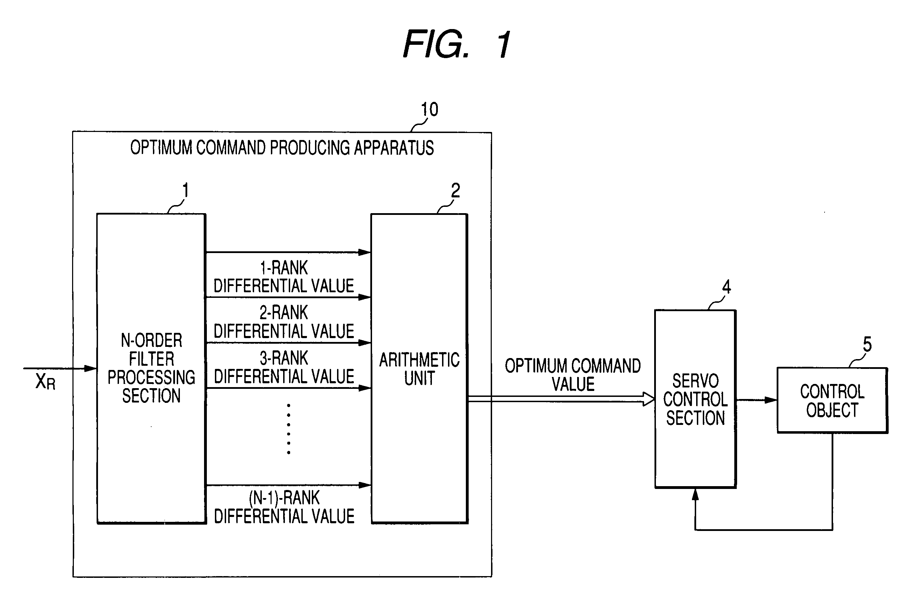

A first embodiment of the invention will be described with reference to the drawings. In Fig. 1, 1 denotes an N-order filter processing section for carrying out an N-order filter processing over a command, and 2 denotes an arithmetic unit for carrying out a processing of multiplying, by a gain, variables to be the outputs of the N-order filter processing section and adding them up. The output of the arithmetic unit 2 is an optimum command value. 4 denotes a servo control section, 5 denotes a control object, and 10 denotes an optimum command producing apparatus. In this embodiment which will be described below, a position command Xref, a speed command Vref and a torque command value Tref are output as the optimum command values.

Moreover, the control object according to this embodiment has a 2-inertia system. A transfer function from a motor position Xm of the control object having the 2-inertia system to a load position XL is expressed in Equation (1).

$$XL = \frac{D2/J2 \cdot s + K2/J2}{s^2 + D2/J2 \cdot s + K2/J2} \cdot Xm \tag{1}$$

Each symbol has meaning, that is, J1 : motor inertia, J2 : load inertia, K2 : spring constant, D2 : viscosity coefficient, and S : Laplacian operator.

In general, a value of D2 is very small and can be often disregarded. Accordingly, description will be given on the assumption that D2 = 0 is set in a first embodiment and a method including D2 will be described in a second embodiment.

When D2 = 0 is set, the Equation (1) can be rewritten to Equation (2).

$$XL = \frac{K2/J2}{s^2 + K2/J2} \cdot Xm \tag{2}$$

At this time, the motor position Xref, the speed Vref and the torque command Tref to be given to a motor are expressed in Equations (3), (4) and (5) in order to implement the load position XL, respectively.

Herein, $XL^{(a)}$ represents an a-rank differential of the variable XL.

$$Xref = XL + J2/K2 \cdot XL^{(2)} \tag{3}$$

$$Vref = XL^{(1)} + J2/K2 \cdot XL^{(3)} \tag{4}$$

$$Tref = (XL^{(2)} + J2/K2 \cdot XL^{(4)}) \cdot J1 + J2 \cdot XL^{(2)} \tag{5}$$

In case of the control object having the 2-inertia system, accordingly, if there are values up to the 4-rank differential of the load position XL, coefficients constituted by K2 and J2 are then multiplied and added up so that the motor position Xref, the speed Vref and the torque command Tref given to the motor which implement the optimum operation of the motor can be calculated.

More specifically, description will be given to the processing of the N-order filter processing section 1. The N-order filter serves to convert the given command into such a command as to implement a differential at necessary times when obtaining an optimum command value. Therefore, it is preferable that the order N should be determined to satisfy the condition.

In the embodiment, the control object 5 has the 2-inertia system. In order to obtain the optimum command value, therefore, it is necessary to convert the given command into a command which is 4-rank differentiable. In order to correspond to the case in which a command cannot be differentiated (for example, a step command), therefore, the filter order N is to be 4 or more. Description will be given to an example in which N is set to be 5 in order to smoothly give a command.

A 5-order filter can be expressed in the form of a transfer function in Equation (6). Herein, $X_R$ represents a variable obtained before a filter processing, XL represents a variable obtained after the execution of the filter processing over $X_R$, and XL creates an optimum command value to be set into the load position of a control object.

$$XL = \frac{K0}{s^5 + K4 \cdot s^4 + K3 \cdot s^3 + K2 \cdot s^2 + K1 \cdot s + K0} \cdot X_R \tag{6}$$

In the Equation (6), K0 to K4 may be determined to be optional values and can be obtained by solving an identity of Equation (7) using a frequency $\lambda$ of a filter, for example.

$$s^5 + K4 \cdot s^4 + K3 \cdot s^3 + K2 \cdot s^2 + K1 \cdot s + K0 = (s + \lambda)^5 \tag{7}$$

When the Equation (6) is expressed in the form of an equation of state, Equation (8) can be obtained.

$$\frac{d}{dt}\begin{bmatrix} XL \\ XL^{(1)} \\ XL^{(2)} \\ XL^{(3)} \\ XL^{(4)} \end{bmatrix} = \begin{bmatrix} 0 & 1 & 0 & 0 & 0 \\ 0 & 0 & 1 & 0 & 0 \\ 0 & 0 & 0 & 1 & 0 \\ 0 & 0 & 0 & 0 & 1 \\ -K0 & -K1 & -K2 & -K3 & -K4 \end{bmatrix} \cdot \begin{bmatrix} XL \\ XL^{(1)} \\ XL^{(2)} \\ XL^{(3)} \\ XL^{(4)} \end{bmatrix} + \begin{bmatrix} 0 \\ 0 \\ 0 \\ 0 \\ K0 \end{bmatrix} \cdot X_R \quad \cdots (8)$$

The Equation (8) is rewritten to Equation (9) in the form of a difference equation every sampling cycle Ts (which calculates a (k+1)th variable from a kth variable.

While the difference equation is merely derived by using the Eulerian primary approximation for simplicity, another discretization method may be used in order to enhance precision in a calculation. In that case, the value of each element of a matrix is different from that in Equation (9).

$$\begin{bmatrix} XL(k+1) \\ XL^{(1)}(k+1) \\ XL^{(2)}(k+1) \\ XL^{(3)}(k+1) \\ XL^{(4)}(k+1) \end{bmatrix} = \begin{bmatrix} 1 & Ts & 0 & 0 & 0 \\ 0 & 1 & Ts & 0 & 0 \\ 0 & 0 & 1 & Ts & 0 \\ 0 & 0 & 0 & 1 & Ts \\ -K0 \cdot Ts & -K1 \cdot Ts & -K2 \cdot Ts & -K3 \cdot Ts & 1-K4 \cdot Ts \end{bmatrix} \cdot \begin{bmatrix} XL(k) \\ XL^{(1)}(k) \\ XL^{(2)}(k) \\ XL^{(3)}(k) \\ XL^{(4)}(k) \end{bmatrix} + \begin{bmatrix} 0 \\ 0 \\ 0 \\ 0 \\ K0 \cdot Ts \end{bmatrix} \cdot X_R(k)$$

$$\cdots \quad (9)$$

Herein, $XL^{(1)}(k+1)$, $XL^{(2)}(k+1)$, $XL^{(3)}(k+1)$ and $XL^{(4)}(k+1)$ represent the values of $XL(k+1)$ from a 1-rank differential to a 4-rank differential, respectively. Thus, the Equation (9) is executed so that the values of $XL(k+1)$ from the 1-rank differential to the 4-rank differential are also calculated automatically.

In the 5-order filter processing, accordingly, it is sufficient that the calculation of the equation (9) is successively carried out by using an input command $X_R(k)$.

In the case in which a positional shift is generated due to the precision problem in the calculation being carrying out by the calculator, it is also possible to carry out a processing of repeating a differential approximation N times as a method of calculating the variable $XL(k)$ from a 1-rank differential value to an N-rank differential value after the filter processing.

For example, when the differential is approximated by using a difference, Equation (10) can be obtained. In order to make a distinction from the Equation (9), the 1-rank differential value to the N-rank differential value are represented by symbols of $XL2^{(1)}(k)$, $XL2^{(2)}(k)$, $\cdots$, $XL2^{(N)}(k)$, respectively.

$$XL2^{(1)}(k) = \frac{XL(k) - XL(k-1)}{Ts}$$

$$XL2^{(2)}(k) = \frac{XL2^{(1)}(k) - XL2^{(1)}(k-1)}{Ts} \qquad \cdots (10)$$

$$\cdot$$
$$\cdot$$
$$\cdot$$

$$XL2^{(N)}(k) = \frac{XL2^{(N-1)}(k) - XL2^{(N-1)}(k-1)}{Ts}$$

By such a calculation, also in the case in which a calculation error is made, the drawback of the positional shift can be eliminated.

Next, description will be given to a processing in the arithmetic unit 2.

Herein, it is preferable to calculate the optimum command values Xref, Vref and Tref in accordance with the Equations (3) to (5) by using $XL(k+1)$, $XL^{(1)}(k+1)$, $XL^{(2)}(k+1)$, $XL^{(3)}(k+1)$ and $XL^{(4)}(k+1)$ which are obtained.

The first embodiment has been described above.

Next, description will be given to a method according to a second embodiment.

If D2 = 0 is not set, the Equations (3) to (5) are changed into Equations (11) to (13).

$$Xref = \frac{1}{D2 \cdot s + K2} \cdot \{K2 \cdot XL + D2 \cdot XL^{(1)} + J2 \cdot XL^{(2)}\} \qquad (11)$$

$$Vref = \frac{1}{D2 \cdot s + K2} \cdot \{K2 \cdot XL^{(1)} + D2 \cdot XL^{(2)} + J2 \cdot XL^{(3)}\} \qquad (12)$$

$$Tref = \frac{1}{D2 \cdot s + K2} \cdot \{K2*XL^{(2)} + D2*XL^{(3)} + J2*XL^{(4)}) \cdot J1 + J2 \cdot K2 \cdot XL^{(2)}\} \qquad (13)$$

As is apparent from the Equations (11) to (13), { } is calculated by a simple arithmetical operation in the same manner as in the Equation according to the first embodiment. Accordingly, the calculation can be carried out through the execution of the arithmetical operation after a 5-order filter processing is performed.

If D2 = 0 is not set, it is necessary to carry out an M-order filter processing again over a result obtained by the calculation of { } as described in the second aspect of the invention. As is apparent from the Equations (11) to (13), a 1-order filter processing is carried out in the embodiment. As is expressed in Equation (14), the 1-order filter takes the form of a primary filter constituted by D2 and K2 (P : a value obtained before the filter processing, Q : a value obtained after the filter processing).

$$Q = \frac{1}{D2 \cdot s + K2} \, P \tag{14}$$

When the Equation (14) is subjected to the Eulerian primary approximation and is described in the form of a difference equation, Equation (15) is obtained.

$$Q(k + 1) = \frac{Ts}{D2} \cdot P(k) + (1 - \frac{K2}{D2} \cdot Ts) \cdot Q(k) \tag{15}$$

Also D2 = 0 is not set, thus, Xref, Vref and Tref can be calculated if the calculations of the Equations (11) to (13) are executed after the 5-order filter processing is performed in the same manner as in the first embodiment.

The second embodiment has been described above.

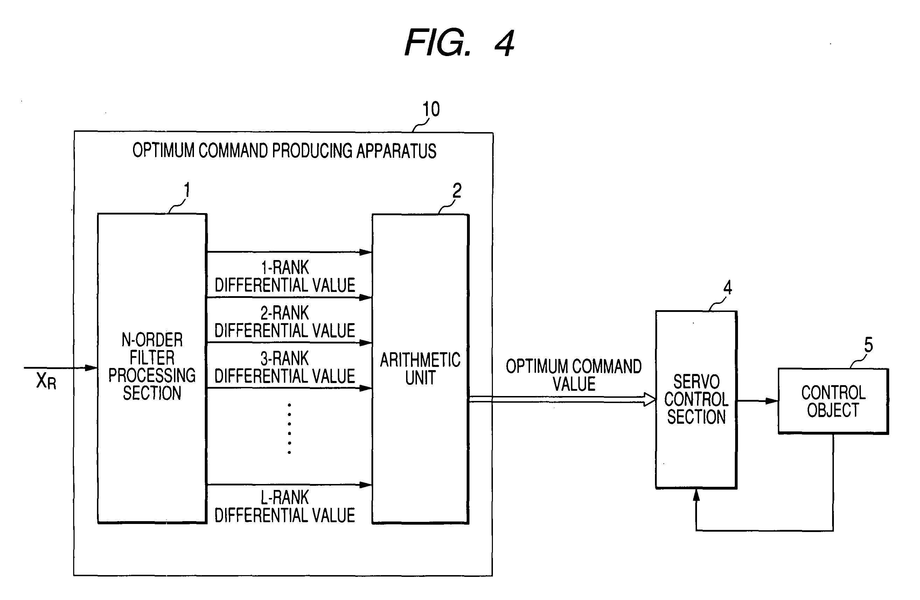

Next, a third embodiment will be described with reference to Fig. 4.

Fig. 4 is different from Fig. 1 for explaining the first embodiment in only one portion. A value subjected to an N-order filter processing is not obtained from a 1-rank differential to an (N-1)-rank differential but a value L is newly defined and is obtained from the 1-rank differential to an L-rank differential, and is input to an arithmetic unit 2. The value of the variable L is set to correspond to the order of a model for approximating a control object.

For example, in the case in which an optimum command is to be created for a control object having a 2-inertia system, it is sufficient that a command is obtained up to a 4-rank differential value as described above. This is equivalent to the fact that the order of the control object having the 2-inertia system is four. More specifically, the value of L is four in this case.

In the first and second examples, moreover, N - 1 = 4 is set so that the order N of the filter is to be five or more. For example, in the case in which a command to be given can be high-order differentiated previously, N of 5 or more is not always required.

For example, in the case in which a command given previously is 2-rank differentiable, it is sufficient that the filter order N is two or more.

In this case, accordingly, N = 2 and L = 4 can be implemented.

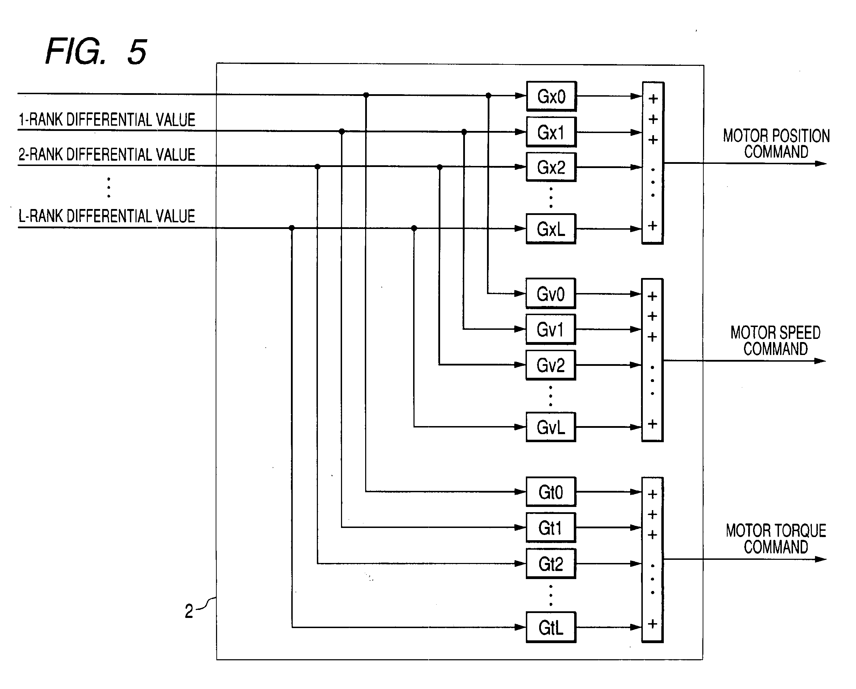

Next, the processing of the arithmetic unit 2 will be described with reference to Fig. 5.

When a signal obtained by carrying out the N-order filter processing over an input command and values from a 1-rank differential to an L-rank differential are set to be $XL^{(0)}(k+1)$, $XL^{(1)}(k+1)$, $XL^{(2)}(k+1)$, $\cdots$, $XL^{(L)}(k+1)$, an optimum command value is obtained as in Equations (16) to (18).

$$Xref = Gx0 \cdot XL + Gx1 \cdot XL^{(1)} + \cdots + GxL \cdot XL^{(L)} \tag{16}$$

$$Vref = Gv0 \cdot XL + Gv1 \cdot XL^{(1)} + \cdots + GvL \cdot XL^{(L)} \tag{17}$$

$$Tref = Gt0 \cdot XL + Gt1 \cdot XL^{(1)} + \cdots + GtL \cdot XL^{(L)} \tag{18}$$

Herein, gains Gx0 to GxL, Gv0 to GvL, and Gt0 to GtL are values set corresponding to a control object, respectively. In the case in which the control object is completely known, it is preferable that specific variables should be set as in the Equations (3), (4) and (5) and a non-relevant variable should be set to be zero. For example, in the first embodiment, Equation (19) can be obtained.

$$Gx0 = 1, \ Gx2 = J2/K2, \ Gx1 = Gx3 = Gx4 = 0$$

$$Gv1 = 1, Gv3 = J2/K2, Gv0 = Gv2 = Gv4 = 0$$

$$Gt2 = J1 + J2, Gt4 = J1 \cdot J2/K2, Gt0 = Gt1 = Gt3 = 0 \tag{19}$$

However, it is actually hard to grasp the structure of the control object completely. For example, a loss portion generated by a friction or a transfer mechanism cannot be usually grasped previously.

In such a case, it is preferable that a machine should be actually operated to identify values corresponding to gains Gx0 to GxL, Gv0 to GvL, and Gt0 to GtL. An identifying method is preferably determined from precision and the amount of a calculation and any technique may be used. For example, a technique based on GA(Genetic Algorithm) may be used.

The third embodiment has been described above.

While the description has been given to the example in which the recursive type filter in the Equation (6) is used as the N-order filter, a non-recursive type filter in Equation (20) may be constituted as the N-order filter (Wi : ith weighting factor).

$$XL(k) = \sum_{i=0}^{N} W_i \cdot X_R(k-i) \qquad \cdots (20)$$

Also in this case, the variable XL(k) from a 1-rank differential value to an N-rank differential value cannot be obtained automatically. Therefore, it is preferable that the differential processing of the Equation (10) should be carried out after a filter processing.

As a method of carrying out the N-order filter processing, moreover, it is also possible to use a method of repeating a filter processing having a lower order than N several times to carry out a calculation (in case of a 5-order, for example, a 2-order filter processing may be carried out twice and a 1-order filter processing may be carried out once).

By outputting the motor position Xref, the speed Vref and the torque command Tref to be given to the motor which are calculated in the first to third embodiments as optimum command values to a conventional feedback control section, finally, it is possible to implement a desirable operation.

While L = 4, N = 5 or N = 2, and M = 1 are set because the control object is set to have the 2-inertia system in the three embodiments described above, it is a matter of course that the apparatus can be applied to all other control objects. At that time, the valuables L, N and M may have other values.

For example, equations corresponding to the Equations (3) to (5) in the case in which a control object is a machine regarded to be provided on a machine table coupled to a ground by means of a spring element are expressed in Equations (21) to (23) and Equations (24) to (26) in the case in which the machine to be provided on the machine table is a rigid body and the case in which the machine has a 2-inertia system, respectively.

J3 : inertia converted value of mass of machine table, K3 : machine table spring constant

· The case in which the machine provided on the machine table is approximated by the rigid body (wherein J1 : rigid body inertia)

$$Xref = XL + \frac{J1+J3}{K3} \cdot XL^{(2)} \tag{21}$$

$$Vref = XL^{(1)} + \frac{J1+J3}{K3} \cdot XL^{(3)} \tag{22}$$

$$Tref = J1 \cdot XL^{(2)} + \frac{J1 \cdot J3}{K3} \cdot XL^{(4)} \tag{23}$$

· The case in which the machine provided on the machine table is approximated by the 2-inertia system

(wherein J1 : motor inertia, J2 : load inertia, K2 : 2-inertia

system spring constant)

$$Xref = XL + (\frac{J2+J3}{K3} + \frac{J2}{K2}) \cdot XL^{(2)} + \frac{J2 \cdot J3}{K2 \cdot K3} \cdot XL^{(4)} \tag{24}$$

$$Vref = XL^{(1)} + (\frac{J2+J3}{K3} + \frac{J2}{K2}) \cdot XL^{(3)} + \frac{J2 \cdot J3}{K2 \cdot K3} \cdot XL^{(5)} \tag{25}$$

$$Tref = (J1+J2) \cdot XL^{(2)} + (\frac{J2 \cdot J3}{K3} + \frac{J1 \cdot J2}{K2} + \frac{J1 \cdot (J2+J3)}{K3}) \cdot XL^{(4)} + \frac{J1 \cdot J2 \cdot J3}{K2 \cdot K3} \cdot XL^{(6)} \tag{26}$$

Thus, the method can be used irrespective of the structure of the control object.

With this structure, moreover, it is possible to take a countermeasure against a change in the control object by varying the value of a gain to be multiplied in an arithmetical operation if an order is equal.

While the position command Xref, the speed command Vref and the torque command value Tref are calculated as the optimum command values in this embodiment, these are not restricted but the optimum command value may be one of a position command, a speed command, an acceleration command and a torque command or a combination thereof.

As described above, according to the invention, it is possible to produce an advantage that a given command can be processed into such a command as to prevent a control object from being easily vibrated without a complicated calculation.

Moreover, there is no model of a control object and a compensator for feedback controlling the model is not provided. Consequently, the amount of a calculation is small. As a result, a time required for the calculation is reduced and a control sampling cycle is shortened. Thus, it is also possible to produce an advantage that a control performance can be enhanced.

Furthermore, a delay from a command is generated by only the N-order filter. Therefore, it is also possible to produce an advantage that a command following property can be more enhanced as compared with the conventional art.

In addition, a parameter to be set is a frequency $\lambda$ of the N-order filter. Consequently, it is also possible to produce an advantage that everybody can easily construct and use the apparatus.

Moreover, it is possible to produce an advantage that a countermeasure can be taken by actually operating a machine and identifying the value of a gain by which each differential value is multiplied also in the case in which the control object cannot be grasped accurately.

According to the invention, furthermore, there is an advantage that it is possible to cope with a change in the control object by simply varying the value of a gain to be multiplied in the arithmetic unit if an order is equal.

[INDUSTRIAL APPLICABILITY]

The invention relates to a method of controlling a machine tool or an industrial robot, and more particularly, is useful for an optimum command producing apparatus for processing a command to be input to a servo control section in order to operate a control object having a vibrating element without a vibration in such a manner that a delay from a command is reduced as greatly as possible.

**Claims**

1. An optimum command producing apparatus for inputting a command, processing the command in such a manner that a control object implements a desirable operation and outputting an optimum command value to a servo control apparatus, comprising:

   an N-order filter processing section for carrying out an N-order filter processing for the command and calculating values from a 1-rank differential to an (N-1) -rank differential of the command subjected to the filter processing, and an arithmetic unit for adding a value obtained by multiplying an output of the N-order filter processing section by a gain.

2. An optimum command producing apparatus for inputting a command, processing the command in such a manner that a control object implements a desirable operation and outputting an optimum command value to a servo control apparatus, comprising:

an N-order filter processing section for carrying out an N-order filter processing for the command and calculating values from a 1-rank differential to an (N-1) -rank differential of the command subjected to the filter processing, an arithmetic unit for adding a value obtained by multiplying an output of the N-order filter processing section by a gain, and an M-order filter processing section for carrying out an M-order filter processing over respective variables output from the arithmetic unit again.

3. An optimum command producing apparatus for inputting a command, processing the command in such a manner that a control object implements a desirable operation and outputting an optimum command value to a servo control apparatus, comprising:

an N-order filter processing section for carrying out an N-order filter processing for the command and calculating values from a 1-rank differential to an L-rank differential of the command subjected to the filter processing, and an arithmetic unit for multiplying, by a gain, the values from the 1-rank differential to the L-rank differential to be outputs of the N-order filter processing section respectively and then adding all of them up.

4. The optimum command producing apparatus according to claim 3, wherein a value of L of the L-rank differential is an order of a model for approximating the control object.

5. The optimum command producing apparatus according to claim 3, wherein a recursive type filter or a non-recursive type filter is used for the N-order filter and an order N of the N-order filter is set to be an order or more which is necessary for converting the command to be L-rank differentiable.

6. The optimum command producing apparatus according to claim 1, wherein the optimum command value is one of a position command, a speed command, an acceleration command and a torque command or a combination thereof.

*FIG. 1*

**OPTIMUM COMMAND PRODUCING APPARATUS** — 10

- 1 — N-ORDER FILTER PROCESSING SECTION
- 2 — ARITHMETIC UNIT
- $X_R$
- 1-RANK DIFFERENTIAL VALUE
- 2-RANK DIFFERENTIAL VALUE
- 3-RANK DIFFERENTIAL VALUE
- ......
- (N-1)-RANK DIFFERENTIAL VALUE
- OPTIMUM COMMAND VALUE
- 4 — SERVO CONTROL SECTION
- 5 — CONTROL OBJECT

*FIG. 2*

10 OPTIMUM COMMAND PRODUCING APPARATUS

$X_R$

1 — N-ORDER FILTER PROCESSING SECTION

1-RANK DIFFERENTIAL VALUE
2-RANK DIFFERENTIAL VALUE
3-RANK DIFFERENTIAL VALUE
......
(N-1)-RANK DIFFERENTIAL VALUE

2 — ARITHMETIC UNIT

3 — M-ORDER FILTER PROCESSING SECTION

OPTIMUM COMMAND VALUE

4 — SERVO CONTROL SECTION

5 — CONTROL OBJECT

11

## FIG. 3

## FIG. 4

OPTIMUM COMMAND PRODUCING APPARATUS — 10

$X_R$ → N-ORDER FILTER PROCESSING SECTION (1)

1-RANK DIFFERENTIAL VALUE
2-RANK DIFFERENTIAL VALUE
3-RANK DIFFERENTIAL VALUE
⋮
L-RANK DIFFERENTIAL VALUE

→ ARITHMETIC UNIT (2) → OPTIMUM COMMAND VALUE → SERVO CONTROL SECTION (4) → CONTROL OBJECT (5)

EP 1 550 924 A1

13

## FIG. 5

1-RANK DIFFERENTIAL VALUE

2-RANK DIFFERENTIAL VALUE

L-RANK DIFFERENTIAL VALUE

Gx0, Gx1, Gx2, GxL

MOTOR POSITION COMMAND

Gv0, Gv1, Gv2, GvL

MOTOR SPEED COMMAND

Gt0, Gt1, Gt2, GtL

MOTOR TORQUE COMMAND

2

EP 1 550 924 A1

EP 1 550 924 A1

## INTERNATIONAL SEARCH REPORT

| | International application No. |
|---|---|
| | PCT/JP03/07164 |

**A. CLASSIFICATION OF SUBJECT MATTER**
Int.Cl⁷ G05B13/02

According to International Patent Classification (IPC) or to both national classification and IPC

**B. FIELDS SEARCHED**

Minimum documentation searched (classification system followed by classification symbols)
Int.Cl⁷ G05B13/02

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-149210 A (Kabushiki Kaisha Yaskawa Denki), 02 June, 1998 (02.06.98), Full text (Family: none) | 1-6 |
| A | JP 7-21724 B2 (Hitachi, Ltd.), 08 March, 1995 (08.03.95), Full text (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 September, 2003 (30.09.03) | 14 October, 2003 (14.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

15

# EP 1 550 924 A1

## INTERNATIONAL SEARCH REPORT

| | International application No. |
|---|---|
| | PCT/JP03/07164 |

**C (Continuation). DOCUMENTS CONSIDERED TO BE RELEVANT**

| Category* | Citation of document, with indication, where appropriate, of the relevant passages | Relevant to claim No. |
|---|---|---|
| A | US 6215270 B1 (Kabushiki Kaisha Yaskawa Denki), 10 April, 2001 (10.04.01), Full text; Figs. 1 to 3 & JP 10-174478 A Full text; Fig. 1 & JP 10-174479 A Full text; Fig. 1 & WO 98/25191 A1 & EP 0943973 A1 | 1-6 |

Form PCT/ISA/210 (continuation of second sheet) (July 1998)